# EUROPEAN PATENT SPECIFICATION

(11) **EP 1 260 548 B1**
(45) Date of publication and mention of the grant of the patent: **02.03.2005**
(21) Application number: 02006603.1
(22) Date of filing: 22.03.2002
(51) Int. Cl.: C08K 5/00, C08K 5/10

(54) **Plasticizer and urethane curable composition**
Weichmacher und Urethan-härtbare Zusammensetzung
Plastifiant et composition durcissable par uréthane

(30) Priority: 24.05.2001 JP 2001155952
(43) Date of publication of application: 27.11.2002
(73) Proprietor: ASAHI GLASS COMPANY LTD., Tokyo 100-8405 (JP); Asahi Glass Polyurethane Material Co., Ltd., Tokyo 104-0033 (JP)
(72) Inventor: Kamemura, Ichiro, 23, Kawarai-cho, Kuki-shi, Saitama (JP); Matsumoto, Yukio, 23, Kawarai-cho, Kuki-shi, Saitama (JP); Imaida, Kazunori, 23, Kawarai-cho, Kuki-shi, Saitama (JP)
(74) Representative: Müller-Boré & Partner Patentanwälte

(56) References cited:
- EP-A- 0 210 442
- EP-A- 0 292 762
- WO-A-01/42345

## Description

The present invention relates to a urethane curable composition which has a low viscosity at room temperature and is thereby excellent in workability, and which is excellent in curing properties, coated membrane appearance after curing, and mechanical strength and weather resistance of a coated membrane.

A two-component type urethane curable composition consisting of a main agent containing an isocyanate group terminated urethane prepolymer as the main component and a curing agent containing an active hydrogen compound as the main component, and a one-component type urethane curable composition containing an isocyanate group terminated urethane prepolymer as the main component, are widely used for building applications such as a waterproof coating, a floor coating, a corrosion-preventing material, a sealing material and an elastic road material, making use of their excellent elasticity.

As the urethane curable composition above, a hand coating type or a spray type, and a one-component type or a mixing type of at least two components, may optionally be selected depending upon the coating method and the composition, respectively, from the viewpoint of e.g. curing time and workability.

For example, as a hand coating two-component type curable composition, one consisting of a main agent containing as the main component an isocyanate group terminated polyurethane prepolymer obtained by reacting polyoxypropylene polyol with tolylene diisocyanate, and a curing agent containing as the main components polyoxypropylene polyol and 4,4'-methylenebis(2-chloroaniline), has conventionally been used.

Further, as a one-component type curable composition, one containing as the main component an isocyanate group terminated polyurethane prepolymer obtained by reacting polyoxypropylene polyol with 4,4'-diphenylmethane diisocyanate, has conventionally been used.

Further, as a two-component type ultra rapid-curing spray type composition, one consisting of a main agent containing as the main component an isocyanate group terminated polyurethane prepolymer obtained by reacting polyoxypropylene polyol with 4,4'-diphenylmethane diisocyanate, and a curing agent containing as the main components polyoxypropylene polyol and diethyltoluenediamine, has conventionally been used.

However, of the above prior art, 4,4'-methylenebis(2-chloroaniline) which is popularly used as a curing agent for a hand coating two-component type, is solid at room temperature, and is usually dissolved in a polyoxyalkylene polyol at a concentration of from 30 to 50 mass% for use. This mixture has a high viscosity, and a bulking agent such as calcium carbonate may further be mixed as a curing agent, and accordingly the viscosity becomes higher and the workability is thereby poor. Accordingly, it is required to add an organic solvent in an amount of from 1 to 8 mass% in order to decrease the viscosity, however, in this case, use of a solvent is unfavorable in view of environmental health, and the thickness of a coated membrane tends to decrease due to an influence of volatilization of the solvent, whereby no stable mechanical properties tend to be obtained.

Further, an isocyanate group terminated urethane prepolymer obtained by reacting a polyoxyalkylene polyol with 4,4'-diphenylmethane diisocyanate, which is used as a one-component type curable composition, has a relatively high viscosity. Further, since a bulking agent such as calcium carbonate is mixed therewith, the viscosity becomes higher and the workability is thereby poor, and also an organic solvent has to be added in an amount of from 3 to 20 mass% in order to decrease the viscosity, and accordingly there are problems by the use of an organic solvent as mentioned above.

On the other hand, the main agent and the curing agent of a two-component ultra rapid-curing spray type composition have a high viscosity at room temperature, and accordingly they have to be heated so that the control temperature will be from 50 to 70°C at the time of spraying, and it may take a lot of trouble with preliminary work. Further, for heating, it may be required to conduct temperature control by keeping even a material tank and piping warm by a heater or a heat insulating material, such being poor in workability.

Under these circumstances, it is an object of the present invention to overcome the above problems of prior art, and to provide a urethane curable composition which undergoes curing at room temperature without using a solvent, which has a low viscosity and is thereby excellent in workability, and further, which is excellent in surface appearance after curing, and mechanical strength and weather resistance of a coated membrane.

The present invention provides the following composition (2) and urethane curable composition (4).

(1) A plasticizer for a urethane curable composition, which contains an ester (C) of a monocarboxylic acid (A) consisting of an unsaturated fatty acid having a carbon number of from 10 to 24 or a fatty acid mixture of the above unsaturated fatty acid with a saturated fatty acid, and a monool (B) having a carbon number of from 1 to 10 has an excellent effect of reducing the viscosity of a urethane curable composition, and its load on environment is low.

(2) A composition which comprises an ester (C) of a monocarboxylic acid (A) consisting of an unsaturated fatty acid having a carbon number of from 10 to 24 or a fatty acid mixture of the above unsaturated fatty acid with a saturated fatty acid, and a monool (B) having a carbon number of from 1 to 10, and a hindered amine type light stabilizer. Hereinafter this composition will be referred to as a composition (D). This composition (D) contains a specific light stabilizer, and accordingly an excellent weather resistance can be obtained when it is used as a plasticizer. Here, the above hindered amine type light stabilizer is preferably a compound having a 2,2,6,6-tetraalkyl-4-piperidine unit. According to this mode, excellent weather resistance can be obtained by employing a compound having a specific unit having a high effect of suppressing deterioration of the ester (C) due to oxidation.

Further, the hindered amine type light stabilizer is contained in an amount of preferably from 0.1 to 20 mass% based on the total amount of the composition (D). According to this mode, an adequate anti-oxidizing effect can be obtained, and further, modulation of the curing agent due to an excess amount of the stabilizer and an influence over an NCO ratio of the main agent and the curing agent, can be suppressed.

(3) A urethane curable composition which contains an ester (C) of a monocarboxylic acid (A) consisting of an unsaturated fatty acid having a carbon number of from 10 to 24 or a fatty acid mixture of the above unsaturated fatty acid with a saturated fatty acid, and a monool (B) having a carbon number of from 1 to 10. Here, the ester (C) is contained in an amount of preferably from 2 to 30 mass% based on the total amount of the urethane curable composition. According to the present invention, the urethane curable composition contains the ester (C) as the plasticizer, and accordingly it has a low viscosity and good workability even without using a solvent, it undergoes curing at room temperature, and it is excellent in surface appearance after curing and mechanical strength of a coated membrane.

(4) A urethane curable composition which contains an ester (C) of a monocarboxylic acid (A) consisting of an unsaturated fatty acid having a carbon number of from 10 to 24 or a fatty acid mixture of the above unsaturated fatty acid with a saturated fatty acid, and a monool (B) having a carbon number of from 1 to 10, and a hindered amine type light stabilizer. This urethane curable composition contains a hindered amine type light stabilizer, and accordingly deterioration of the ester (C) due to oxidation can be suppressed, and an excellent weather resistance can be obtained.

Further, the ester (C) is contained in an amount of preferably from 2 to 30 mass% based on the total amount of the urethane curable composition. According to this mode, the viscosity is adequately low and the workability is good even without using a solvent, and bleedout from a cured product can be suppressed, whereby decrease in physical properties of the curable composition can be prevented.

Further, the urethane curable composition of the above (3) or (4) is preferably used for the following applications.

(5a) A hand coating type waterproof coating, floor coating or corrosion-preventing material.

(5b) A ultra rapid-curing spray type waterproof coating, floor coating or corrosion-preventing material.

Now, the present invention will be described in detail with reference to the preferred embodiments.

First, the ester (C) according to the present invention will be explained.

The ester (C) according to the present invention is an ester of a monocarboxylic acid (A) consisting of an unsaturated fatty acid having a carbon number of from 10 to 24 or a fatty acid mixture of the above unsaturated fatty acid with a saturated fatty acid, and a monool (B) having a carbon number of from 1 to 10. The ester (C) may consist of only one type or may be a mixture of at least two types.

Of the monocarboxylic acid (A), the unsaturated fatty acid having a carbon number of from 10 to 24 may, for example, be palmitoleic acid (cis-9-hexadecenoic acid: C₁₅H₂₉COOH), oleic acid (cis-9-octadecenoic acid: C₁₇H₃₃COOH), vaccenic acid (cis-11-octadecenoic acid: C₁₇H₃₃COOH), linoleic acid ((Z,Z)-9,12-octadecadienoic acid: C₁₇H₃₁COOH), linolenic acid ((Z,Z, Z) -9,12,15-octadecatrienoic acid: C₁₇H₂₉COOH) or nervonic acid (cis-15-tetracosenoic acid: C₂₃H₄₅COOH).

Further, the saturated fatty acid which may be contained in the monocarboxylic acid (A) may, for example, be capric acid, lauric acid, myristic acid, palmitic acid, stearic acid, eicosanoic, docosanoic acid or tetracosanoic acid. Among them, preferred is one having a carbon number of from 10 to 18. The content of the saturated fatty acid in the monocarboxylic acid (A) is preferably at most 50 mass%, more preferably at most 30 mass%.

The monool (B) having a carbon number of from 1 to 10 may be an alkanol such as methanol, ethanol, 1-propanol, 2-propanol, 1-butanol, 2-methyl-1-propanol, 1-octanol, 2-ethyl-1-hexanol or cyclohexanol, and among them, preferred is an alkanol having a carbon number of from 1 to 4, particularly preferred is methanol.

As the ester (C) in the present invention, specifically, a fatty acid ester mixture obtained by denaturing vegetable fat or fatty oil such as linseed oil, coconut oil, olive oil, poppy oil, sesame oil, soybean oil, rice bran oil, camellia oil, rapeseed oil, sunflower oil or peanut oil, or animal fat or fatty oil of e.g. duck, rabbit, bovine, pig, horse, sheep, mink, chicken, scorpion fish, sunfish or red snapper, may be mentioned. Among them, preferred is a methyl monocarboxylate mixture which is a methanol ester of a fatty acid such as a rice bran fatty acid (analysis example: a mixture comprising 33% of linoleic acid, 37% of oleic acid, 20% of palmitic acid, 5% of stearic acid and 5% of linolenic acid), a soybean oil fatty acid (analysis example: a mixture comprising 44% of linoleic acid, 32% of oleic acid, 13% of palmitic acid, 4% of stearic acid and 7% of linolenic acid) or a rapeseed oil fatty acid (analysis example: a mixture comprising 22% of linoleic acid, 58% of oleic acid, 5% of palmitic acid, 3% of stearic acid and 12% of linolenic acid), since their industrial production is easy, the viscosity is low (the viscosity is from 5 to 8 mPa·s at 20°C), and the volatility tends to be low. Namely, preferred is a denatured product of fat or fatty oil such as a rice bran fatty acid methyl ester (iodine value: 100), a soybean oil fatty acid methyl ester (iodine value: 120), a beef tallow fatty acid methyl ester (iodine value: 61) or a methyl oleate (iodine value: 85).

Now, the light stabilizer according to the present invention will be explained below. The composition (D) or the urethane curable composition according to the present invention contains a hindered amine type light stabilizer. By the hindered amine type light stabilizer, deterioration of the unsaturated fatty acid contained in the ester (C) due to oxidation can be suppressed, whereby an excellent weather resistance can be obtained.

The hindered amine type light stabilizer of the present invention preferably has a structure having a 2,2,6,6-tetraalkyl-4-piperidine unit. Specifically, it may, for example, be bis(2,2,6,6-tetramethyl-4-piperidyl)sebacate (the following formula (1)), bis(1,2,2,6,6-pentamethyl-4-piperidyl)sebacate (the following formula (2)), bis(2,2,6,6-tetramethyl-1-octyloxy-4-piperidyl)sebacate (the following formula (3)), bis(1,2,2,6,6-pentamethyl-4-piperidyl)[[3,5-bis(1,1-dimethylethyl)-4-hydroxyphenyl]methyl]butylmalonate (the following formula (4)) or poly[{6-(1,1,3,3-tetramethylbutyl)amino-1,3,5-triazin-2,4-diyl}{(2,2,6,6-tetramethyl-4-piperidyl)imino}hexamethylene{(2,2,6,6-tetramethyl-4-piperidyl)imino}] (the following formula (5)). Among them, preferred is bis(1,2,2,6,6-pentamethyl-4-piperidyl)sebacate or bis(2,2,6,6-tetramethyl-1(octyloxy)-4-piperidyl)sebacate.

Further, as a stabilizer, in addition to the above hindered amine type light stabilizer, a hindered phenol type antioxidant, a phosphite type antioxidant or a benzotriazole type ultraviolet absorber may, for example, be used together.

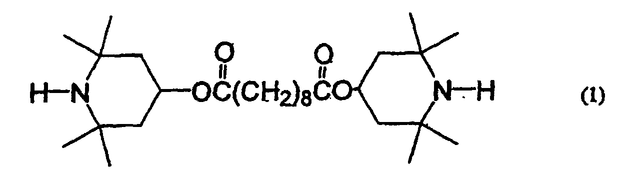

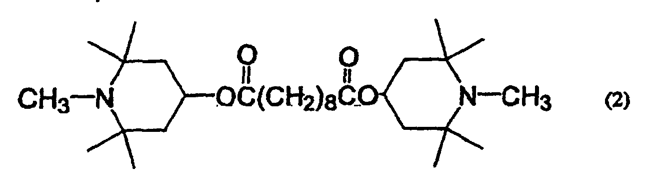

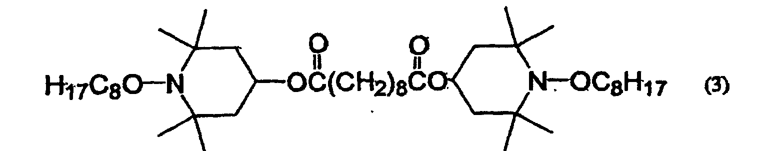

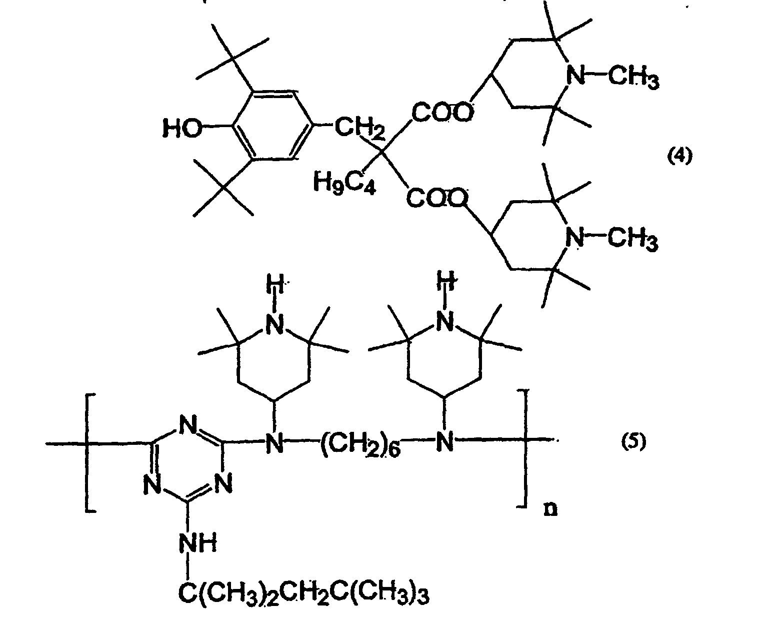

Now, the plasticizer according to the present invention will be explained. In the present invention, the ester (C) is used as a plasticizer for a urethane curable composition. Namely, one aspect of the present invention resides in a plasticizer for a urethane curable composition containing the above ester (C). The viscosity of the plasticizer in the present invention at 20°C is preferably from 1 to 20 mPa·s, more preferably from 3 to 10 mPa·s. By using said plasticizer, the viscosity of the urethane curable composition can remarkably be decreased substantially without using a solvent, whereby the handling tends to be easy, and workability can be improved.

As the plasticizer, in addition to the ester (C), a general purpose plasticizer such as chlorinated paraffin, a petroleum type plasticizer or a phthalate such as dioctyl phthalate may be used together in an small amount. The amount is preferably at most 30 mass% based on the total amount of the plasticizer, more preferably at most 5 mass%, and particularly preferably no such a plasticizer is used.

In the present invention, the amount of the plasticizer is preferably from 2 to 30 mass% based on the total amount of the urethane curable composition. If the amount of the plasticizer is less than 2 mass%, no adequate effect of decreasing viscosity may be obtained. If the amount of the plasticizer exceeds 30 mass%, bleeding from a cured product is likely to take place, and in a case where e.g. a topcoat is coated thereon, adhesive properties tend to be inadequate.

Now, the composition (D) according to the present invention will be explained below. One aspect of the present invention resides in a composition comprising the above ester (C) and the hindered amine type light stabilizer. This composition (D) is preferably used as a plasticizer for a urethane curable composition. The proportion of the hindered amine type light stabilizer based on the total amount of the ester (C) and the hindered amine type light stabilizer is preferably from 0.1 to 20 mass%. If the light stabilizer is less than 0.1 mass%, the anti-oxidizing effect tends to be inadequate. Further, if it exceeds 20 mass%, since the stabilizer is a secondary or tertiary amine compound, it functions as a catalyst for a curing reaction of the urethane curable composition as mentioned hereinafter and unnecessarily accelerates the curing reaction. Further, in a case where the stabilizer is a secondary amine compound or a hydroxyl group-containing compound, such problems are likely to arise as a decrease in the NCO ratio of the main agent and the curing agent (as mentioned hereinafter) and a decrease in physical properties of the cured product. Here, the proportion of the hindered amine type light stabilizer and the ester (C) is a proportion in the composition (D) or a proportion in the urethane curable composition. Namely, even in a case where the urethane curable composition contains the ester (C) and the hindered amine type light stabilizer, the proportion of the hindered amine type light stabilizer based on the total of the ester (C) and the hindered amine type light stabilizer is preferably from 0.1 to 20 mass%.

As the method of adding the plasticizer in the present invention, in a case where the urethane curable composition is a two-component type, the plasticizer may be added to the main agent and/or the curing agent. Particularly in a case of a hand coating two-component type curable composition, it is preferred to add the plasticizer to the curing agent. It is effective to add the plasticizer to the curing agent particularly when the curing agent contains a bulking agent such as calcium carbonate. By addition of the plasticizer, the curing agent can uniformly be kneaded with a high efficiency, and the surface appearance of a cured product will be outstandingly good. The amount of the plasticizer to be added to the curing agent is preferably at most 40 mass%, more preferably from 5 to 30 mass%, based on the curing agent having the plasticizer added thereto.

On the other hand, with respect to a two-component ultra rapid-curing spray type curable composition, it is preferred to add the plasticizer to the main agent since the main agent has a higher viscosity than the curing agent. By addition of the plasticizer, the control temperature at the time of spraying can be lowered, and the composition can adequately be applied by heating to a level of from 30 to 50°C. The amount of the plasticizer to be added to the main agent is preferably at most 40 mass%, more preferably from 5 to 30 mass%, based on the main agent having the plasticizer added thereto.

Further, the amount of the plasticizer in a one-component type curable composition is preferably from 2 to 30 mass% based on the total amount of the curable composition.

Now, the urethane curable composition according to the present invention will be explained. The urethane curable composition of the present invention is a composition to obtain a urethane resin such as a urethane resin or a urethane urea resin, and the urethane resin is a non-foaming resin. Here, as the urethane curable composition, a urethane prepolymer is preferably employed. Namely, the point of the present invention is to use the ester (C) as a plasticizer, and it is most suitable to add the ester (C) to a urethane prepolymer having a high viscosity to decrease its viscosity. More particularly, as the urethane curable composition of the present invention, a non-foaming urethane curable composition which comprises an isocyanate group terminated urethane prepolymer obtained by reacting a polyol and a polyisocyanate is suitable. Namely, a non-foaming one-component type urethane curable composition containing an isocyanate group terminated urethane prepolymer as the main component or a non-foaming two-component type urethane curable composition consisting of a main agent containing an isocyanate group terminated urethane prepolymer as the main component and a curing agent, is suitable. Such a urethane curable composition can be used for various applications, and it is particularly useful for a waterproof coating, a floor coating or a corrosion-preventing material.

The urethane curable composition of the present invention may be of a spray type or a hand coating type. Particularly when e.g. shortening of construction work is considered, preferred is a two-component ultra rapid-curing spray type urethane curable composition. Further, when e.g. prevention of scatter is considered, preferred is a hand coating type urethane curable composition. From the viewpoint of easiness of control of the curing time, preferred is a two-component type, particularly preferred is a urethane curable composition wherein a main agent containing an isocyanate group terminated urethane prepolymer as the main component and a curing agent containing as the main component at least one member selected from the group consisting of a polyol, a polyamine and water, are mixed.

The polyisocyanate as the material of the isocyanate group terminated urethane prepolymer is not particularly limited, and it may, for example, be a low molecular weight isocyanate compound such as diphenylmethane-4,4'-diisocyanate (MDI), carbodiimide modified diphenylmethane diisocyanate (liquid MDI), polymethylene polyphenyl isocyanate (crude MDI), 2,4-tolylene diisocyanate (2,4-TDI), 2,6-tolylene diisocyanate (2,6-TDI), xylylene diisocyanate (XDI) or hexamethylene diisocyanate. Further, e.g. a biuret modified product obtained by modifying the above low molecular weight isocyanate compound may, for example, be mentioned also. They may be used alone or in combination as a mixture of at least two.

Among them, preferred as the polyisocyanate is MDI, liquid MDI, a modified product thereof or the like, in a case where the urethane curable composition is a two-component ultra rapid-curing spray type urethane curable composition. Further, in a case of a hand coating type urethane curable composition, preferred as the polyisocyanate is 2,4-TDI, 2,6-TDI, MDI, liquid MDI, a modified product thereof or the like.

Here, as the isocyanate group terminated urethane prepolymer, preferred is a compound obtained by reacting the above low molecular weight isocyanate compound with a polyol as mentioned hereinafter so that the NCO ratio is from 1.5 to 20 and the isocyanate group content is from 1 to 20 mass%. Here, the NCO ratio is a proportion of isocyanate groups to active hydrogen-containing groups, i.e. a molar ratio obtained by dividing the amount of isocyanate groups by the amount of active hydrogen-containing groups. Here, the active hydrogen-containing group may, for example, be an amino group (-NH₂) or a hydroxyl group (-OH), and it is a hydroxyl group in a case of a polyol.

The preferred isocyanate group content of the isocyanate group terminated urethane prepolymer is from 2 to 5 mass% in a two-component hand coating type waterproof coating, from 4 to 8 mass% in a two-component hand coating type floor coating, from 0.2 to 2.5 mass% in a one-component moisture curable waterproof coating, from 10 to 20 mass% in a two-component ultra rapid-curing spray type waterproof coating, from 15 to 25 mass% in a two-component ultra rapid-curing spray type floor coating, and from 20 to 30 mass% in a two-component ultra rapid-curing spray type corrosion-preventing material.

On the other hand, the polyol as a material of the isocyanate group terminated urethane prepolymer is not particular limited so long as it has at least two hydroxyl groups. It may, for example, be a polyester polyol; a polyether polyol such as polyoxypropylene polyol, polyoxypropyleneoxyethylene polyol or polyoxytetramethylene glycol; a castor oil type polyol; a fire retardant polyol such as a phosphorus-containing polyol or a general polyol such as a polybutadiene type polyol. The castor oil type polyol is e.g. castor oil or a modified polyol obtained by hydrogenation of castor oil. They may be used alone or in combination as a mixture of at least two. In the present invention, a polyether polyol is preferred, and polyoxypropylene polyol is more preferred. Further, a mixture of polyoxypropylene diol with polyoxypropylene triol may also be used preferably. In such a case, the molar ratio is preferably from 60-90/40-10. The number of hydroxyl groups in the polyol is preferably from 2 to 4, more preferably at most 3, particularly preferably at most 2.5 on the average, furthermore preferably from 2.1 to 2.4 on the average. If the number of hydroxyl groups is less than 2, it tends to be difficult to make a cured coated membrane have a high molecular weight, whereby mechanical strength of the cured product tends to be inadequate, and if it exceeds 4, the crosslinking density tends to be too high, whereby elongation properties of the cured product tend to be poor.

Further, the hydroxyl value of the polyol to be used for the isocyanate group terminated urethane prepolymer is preferably from 20 to 80 mgKOH/g, more preferably from 40 to 70 mgKOH/g in the case of a hand coating type. In the case of a ultra rapid-curing spray type, it is preferably from 25 to 280 mgKOH/g, more preferably from 30 to 120 mgKOH/g. Further, the hydroxyl value of the polyol to be used for a one-component moisture curable urethane curable composition is preferably from 14 to 56 mgKOH/g. The polyol to be used for the curing agent is preferably polyoxypropylene polyol having a hydroxyl value of from 10 to 112 mgKOH/g.

The polyamine to be used for the curing agent is not particularly limited, and it may, for example, be an aromatic polyamine or an aliphatic polyamine. Specifically, it may, for example, be diethyltoluenediamine, dialkyl-4,4'-methylenedianiline, tetraalkyl-4,4'-methylenedianiline, 4,4'-methylenebis(2-chloroaniline), bismethylthiotoluenediamine, polyoxyalkylenediamine or methaxylylenediamine. They may be used alone or in combination as a mixture of at least two. Further, by combination of the above aromatic polyamine with a polyol having a relatively high molecular weight, an appropriate curing properties can be obtained.

The number of hydroxyl groups of the polyol to be used for the curing agent is preferably from 2 to 4, more preferably from 2 to 3. Further, its hydroxyl value is preferably from 10 to 112 mgKOH/g, more preferably from 16 to 56 mgKOH/g. Further, as the polyol, preferred is polyoxypropylene polyol. If the number of hydroxyl groups is less than 2, it tends to be difficult to make the cured coated membrane have a high molecular weight, whereby curing properties tend to be poor, and the mechanical strength of the cured product tends to be inadequate, and if the number of hydroxyl groups exceeds 4, the crosslinking density tends to be too high, whereby elongation properties of the cured product tend to be poor. Further, if the hydroxyl value is less than 10 mgKOH/g, the viscosity of the polyol tends to be too high, and if it exceeds 112 mgKOH/g, the molecular weight tends to be small, and the amount in the curing agent tends to be small, and the amount of the plasticizer as an alternative thereto tends to increase, such being unfavorable.

In a two-component type urethane curable composition wherein a main agent and a curing agent are mixed, the main agent and the curing agent are preferably mixed so that the molar ratio of isocyanate groups in the main agent and active hydrogen-containing groups in the curing agent (NCO ratio) is from 0.8 to 1.3, more preferably from 0.9 to 1.25. If the NCO ratio is higher than 1.3 and the amount of the isocyanate compound is excessive, the curing tends to be slow, and excess isocyanate groups may react with moisture in the air for foaming, whereby the cured product may be fragile. Further, if the above NCO ratio is lower than 0.8 and the amount of e.g. polyol or polyamine is excessive, e.g. unreacted polyol or polyamine may remain, thus causing decrease in strength, a bleed phenomenon or remaining of tack.

Further, in the curing agent, a curing catalyst is contained so as to obtain adequate curing properties. As the curing catalyst, a known catalyst to accelerate a urethane/urea forming reaction may be used, and it may, for example, be lead carboxylate, tin carboxylate or a tertiary amine compound.

Further, the curing agent may contain, in addition to the above basic components, an additive selected from the group consisting of a bulking agent, a pigment and a flame retardant. The bulking agent may, for example, be calcium carbonate, talc, clay, silica or carbon. The pigment may be an inorganic pigment such as chromium oxide or titanium oxide or an organic pigment such as a phthalocyanine pigment.

In the present invention, the urethane curable composition preferably contains substantially no solvent. Here, containing substantially no solvent means that no solvent to be added with a purpose of decreasing the viscosity is contained, not that no solvent which is preliminarily contained in e.g. the additive is contained. Specifically, the content of the solvent in the main agent and the curing agent is preferably at most 3 mass%, more preferably at most 1 mass%.

Now, the present invention will be explained in further detail with reference to Examples. However, it should be understood that the present invention is by no means restricted to such specific Examples.

### EXAMPLE 1

17 Parts by mass of polyoxypropylene triol having a molecular weight of 3,000, 68 parts by mass of polyoxypropylene diol having a molecular weight of 2,000 and 15 parts by mass of a mixture comprising 2,4-TDI and 2,6-TDI (in a mass ratio of 2,4-TDI/2,6-TDI of 80/20) were mixed and reacted (NCO ratio: 2.03) to produce an isocyanate group terminated urethane prepolymer having an isocyanate group content of 3.6 mass% as a main agent.

7.30 Parts by mass of 4,4'-methylenebis(2-chloroaniline) was dissolved in 21.04 parts by mass of polyoxypropylene diol having a molecular weight of 2,000, and with this melt mixed liquid thus obtained, 12.16 parts by mass of a soybean oil fatty acid methyl ester (viscosity of 7.9 mPa·s at 20°C), 0.5 part by mass of bis(1,2,2,6,6-pentamethyl-4-piperidyl)sebacate (TINUVIN765, manufactured by Ciba Specialty Chemicals), 55 parts by mass of calcium carbonate, 3 parts by mass of a pigment paste and 1 part by mass of lead 2-ethylhexanoate (lead content: 24 mass%) were mixed to prepare a curing agent.

The above main agent and curing agent constituting a two-component type urethane curable composition were blended so that the mass ratio would be 1:1 (NCO ratio: 1.1) to obtain a waterproof coating.

### EXAMPLE 2

28.6 Parts by mass of polyoxypropylene triol having a molecular weight of 6,000 and 3.4 parts by mass of 4,4'-diphenylmethane diisocyanate were reacted (NCO ratio: 1.9) to obtain an isocyanate group terminated urethane prepolymer having an isocyanate group content of 1.65 mass%. 17 Parts by mass of a rice bran fatty acid methyl ester (viscosity of 5.5 mPa·s at 20°C), 0.5 part by mass of TINUVIN765, 45 parts by mass of calcium carbonate, 5.2 parts by mass of a pigment paste and 0.3 part by mass of bis(2-morpholinoethyl)ether were mixed therewith, and a one-component type urethane curable composition thus obtained was used as a waterproof coating.

### EXAMPLE 3

48 Parts by mass of polyoxypropylene diol having a molecular weight of 2,000, 15 parts by mass of methyl oleate (viscosity of 6.3 mPa·s at 20°C), 33 parts by mass of 4,4'-diphenylmethane diisocyanate and 4 parts by mass of carbodiimide modified MDI were reacted (NCO ratio: 6.08) to produce an isocyanate group terminated urethane prepolymer having an isocyanate group content of 10.3 mass% as a main agent.

12 Parts by mass of diethyltoluenediamine, 84 parts by mass of polyoxypropylene diol having a molecular weight of 2,000, 0.6 part by mass of a mixture comprising bis(2,2,6,6-tetramethyl-1-octyloxy-4-piperidyl)sebacate with a reaction product of 1,1-dimethylethyl hydroperoxide and octane (TINUVIN123, manufactured by Ciba Specialty Chemicals), 3 parts by mass of a pigment paste and 0.5 part by mass of a salt of 2-ethylhexoate and 1,2-dimethylimidazole were mixed to obtain a curing agent.

A two-component type urethane curable composition consisting of the above main agent and curing agent was subjected to spray application so that the volume ratio would be 1:1 (NCO ratio: about 1.03) to obtain a waterproof coating.

### EXAMPLE 4

The same isocyanate group terminated urethane prepolymer as in Example 1 was used as a main agent.

7.30 Parts by mass of 4,4'-methylenebis(2-chloroaniline) was dissolved in 21.04 parts by mass of polyoxypropylene diol having a molecular weight of 2,000, and with this melt mixed liquid thus obtained, 12.16 parts by mass of a rice bran fatty acid methyl ester, 0.3 part by mass of TINUVIN765, 0.1 part by mass of 2-(2H-benzotriazol-2-yl)-6-(linear and side chain dodecyl)-4-methylphenol (TINUVIN571, manufactured by Ciba Specialty Chemicals), 0.1 part by mass of a C7-C9 side chain alkyl ester of [3,5-bis(1,1-dimethylethyl)-4-hydroxy]benzenepropanoic acid (IRGANOX1135, manufactured by Ciba Specialty Chemicals), 55 parts by mass of calcium carbonate, 3 parts by mass of a pigment paste and 1 part by mass of lead 2-ethylhexanoate (lead content: 24 mass%) were mixed to prepare a curing agent.

The above main agent and curing agent constituting a two-component type urethane curable composition were blended so that the mass ratio would be 1:1 (NCO ratio: 1.1) to obtain a waterproof coating.

### EXAMPLE 5 (Reference Example)

A waterproof coating was obtained in the same manner as in Example 1 except that 1.0 part by mass of 2,6-di-tert-butyl-4-methylphenol (BHT) as an antioxidant was used instead of TINUVIN765, and the amount of the soybean oil fatty acid methyl ester as a plasticizer was 11.66 parts by mass.

### EXAMPLE 6 (Reference Example)

A waterproof coating was obtained in the same manner as in Example 1 except that 0.5 part by mass of ethyl-4-[[(methylphenylamino)methylene]amino]benzoate (ZIKASORB, manufactured by ZIKO) which is a benzoate type ultraviolet absorber was used instead of TINUVIN765.

### COMPARATIVE EXAMPLE 1

A waterproof coating was obtained in the same manner as in Example 1 except that 12.66 parts by mass of dioctyl phthalate (viscosity of 57 mPa·s at 20°C) was used instead of the soybean oil fatty acid methyl ester as a plasticizer, and no TINUVIN765 was used.

### TEST EXAMPLES

With respect to each of the waterproof coating obtained in Examples 1 to 6 and Comparative Example 1, performances were evaluated in the following methods. The results are shown in Table 1.

### Initial viscosity

The viscosity of itself with respect to the one-component moisture curable type or the viscosity (unit: mPa·s) at 20°C 3 minutes after the main agent and the curing agent were mixed with respect to the two-component hand coating type was measured.

### Coated membrane physical properties

Mechanical properties of a cured coated membrane were measured in accordance with JIS-A6021. In Table 1, Ts is a tensile strength (unit: N/mm²) and E is elongation at breakage (unit: %).

### Weather resistance

In a laboratory at a temperature of 23°C at a relative humidity of 50%, the waterproof coating 7 days after coating was exposed to a WS type accelerated exposure testing apparatus of JIS-A1415 (Sunshine Weather meter) for 250 hours to measure the tensile strength (Ts') to obtain a retention based on the tensile strength before the test (Ts).

**Table 1**

| | Initial viscosity (mPa·s) | Coated membrane physical properties | | Weather resistance | |
|---|---|---|---|---|---|
| | | Ts | E | Ts' | Retention (%) |
| Example 1 | 6200 | 4.2 | 720 | 4.0 | 95 |
| Example 2 | 9400 | 4.5 | 800 | 4.3 | 96 |
| Example 3 | - | 12.0 | 380 | 10.2 | 85 |
| Example 4 | 6300 | 4.4 | 740 | 4.5 | 102 |
| Example 5* | 6200 | 4.6 | 680 | 3.2 | 70 |
| Example 6* | 6200 | 4.0 | 700 | 2.1 | 53 |
| Comparative Example 1 | 10200 | 4.6 | 800 | 4.5 | 98 |

| | | | | | |
|---|---|---|---|---|---|
| * Reference Examples | | | | | |

As evident from the results shown in Table 1, in Examples 1 to 4, an adequately low viscosity could be obtained without using a solvent by combination of a specific ester with a light stabilizer, and a cured coated membrane is excellent also in weather resistance. On the other hand, in Comparative Example 1 wherein dioctyl phthalate was used as a plasticizer, the viscosity is high. Further, in Examples 5 and 6 wherein BHT and a benzoate type ultraviolet absorber were used as a light stabilizer, respectively, the retention of the tensile strength after the exposure test decreased, and it is found that a hindered amine type light stabilizer is effective.

As explained above, the ester (C) of the present invention has the same or higher effect of decreasing the viscosity as a conventional one, and has a light load to environment which is pointed out for a phthalate type plasticizer. Further, when a specific light stabilizer in addition to this ester (C) is added to a urethane curable composition, the urethane curable composition has an adequately low viscosity without using a solvent and it is thereby excellent in workability, it undergoes curing at room temperature, it has good curing properties and coated membrane appearance after curing, and it is excellent in weather resistance. This urethane curable composition is suitable for various applications such as a waterproof coating, a floor coating and a corrosion-preventing material, and is particularly useful as a waterproof coating.

## Claims

1. A composition which comprises an ester (C) of a monocarboxylic acid (A) consisting of an unsaturated fatty acid having a carbon number of from 10 to 24 or a fatty acid mixture of the above unsaturated fatty acid with a saturated fatty acid, and a monool (B) having a carbon number of from 1 to 10, and a hindered amine type light stabilizer.

2. The composition according to Claim 1, wherein the hindered amine type light stabilizer is a compound having a 2,2,6,6-tetraalkyl-4-piperidine unit.

3. The composition according to Claim 1 or 2, wherein the hindered amine type light stabilizer is contained in an amount of from 0.1 to 20 mass% based on the total amount of the composition.

4. A urethane curable composition which contains an ester (C) of a monocarboxylic acid (A) consisting of an unsaturated fatty acid having a carbon number of from 10 to 24 or a fatty acid mixture of the above unsaturated fatty acid with a saturated fatty acid, and a monool (B) having a carbon number of from 1 to 10, and a hindered amine type light stabilizer.

5. The urethane curable composition according to Claim 4, wherein the ester (C) is contained in an amount of from 2 to 30 mass% based on the total amount of the urethane curable composition.

6. The urethane curable composition according to Claim 4 or 5, which is a hand coating type waterproof coating, floor coating or corrosion-preventing material.

7. The urethane curable composition according to Claim 4, 5 or 6, which is a ultra rapid-curing spray type waterproof coating, floor coating or corrosion-preventing material.

## Patentansprüche

1. Zusammensetzung, umfassend einen Ester (C) aus einer Monocarbonsäure (A), die aus einer ungesättigten Fettsäure mit einer Kohlenstoffanzahl von 10 bis 24 oder einem Fettsäuregemisch der vorstehenden ungesättigten Fettsäure mit einer gesättigten Fettsäure besteht, und einem Monool (B) mit einer Kohlenstoffanzahl von 1 bis 10 und ein Lichtstabilisierungsmittel vom gehinderten Amintyp.

2. Zusammensetzung nach Anspruch 1, wobei das Lichtstabilisierungsmittel vom gehinderten Amintyp eine Verbindung mit einer 2,2,6,6-Tetraalkyl-4-piperidineinheit ist.

3. Zusammensetzung nach Anspruch 1 oder 2, wobei das Lichtstabilisierungsmittel vom gehinderten Amintyp in einer Menge von 0,1 bis 20 Gew.-%, bezogen auf die Gesamtmenge der Zusammensetzung, vorhanden ist.

4. Urethan-härtbare Zusammensetzung, enthaltend einen Ester (C) aus einer Monocarbonsäure (A), die aus einer ungesättigten Fettsäure mit einer Kohlenstoffanzahl von 10 bis 24 oder einem Fettsäuregemisch der vorstehenden ungesättigten Fettsäure mit einer gesättigten Fettsäure besteht, und einem Monool (B) mit einer Kohlenstoffanzahl von 1 bis 10 und ein Lichtstabilisierungsmittel vom gehinderten Amintyp.

5. Urethan-härtbare Zusammensetzung nach Anspruch 4, wobei der Ester (C) in einer Menge von 2 bis 30 Gew.-%, bezogen auf die Gesamtmenge der Urethan-härtbaren Zusammensetzung, vorhanden ist.

6. Urethan-härtbare Zusammensetzung nach Anspruch 4 oder 5, die eine wasserfeste Beschichtung vom Handbeschichtungstyp, eine Bodenbeschichtung oder ein korrosionsverhinderndes Material ist.

7. Urethan-härtbare Zusammensetzung nach Anspruch 4, 5 oder 6, die eine wasserfeste Beschichtung vom ultraschnell-härtenden Sprühtyp, eine Bodenbeschichtung oder ein korrosionsverhinderndes Material ist.

## Revendications

1. Composition qui comprend un ester (C) d'un acide monocarboxylique (A) constitué d'un acide gras insaturé comportant un nombre d'atomes de carbone de 10 à 24 ou d'un mélange d'acides gras de l'acide gras insaturé susdit avec un acide gras saturé, et d'un monool (B) comportant un nombre d'atomes de carbone de 1 à 10, et un agent de stabilisation à la lumière de type amine encombrée.

2. Composition selon la revendication 1, dans laquelle l'agent de stabilisation à la lumière de type amine encombrée est un composé comportant une unité 2, 2, 6, 6-tétraalkyl-4-pipéridine.

3. Composition selon la revendication 1 ou 2, dans laquelle l'agent de stabilisation à la lumière de type amine encombrée est contenu dans une quantité de 0,1 à 20 % en masse, sur la base de la quantité totale de la composition.

4. Composition durcissable d'uréthane, qui contient un ester (C) d'un acide monocarboxylique (A) constitué d'un acide gras insaturé comportant un nombre d'atomes de carbone de 10 à 24 ou un mélange d'acides gras de l'acide gras insaturé susdit avec un acide gras saturé, et d'un monool (B) comportant un nombre d'atomes de carbone de 1 à 10, et un agent de stabilisation à la lumière de type amine encombrée.

5. Composition durcissable d'uréthane selon la revendication 4, dans laquelle l'ester (C) est contenu dans une quantité de 2 à 30 % en masse, sur la base de la quantité totale de la composition durcissable d'uréthane.

6. Composition durcissable d'uréthane selon la revendication 4 ou 5, qui est un revêtement imperméable, un revêtement pour sol, ou un matériau destiné à inhiber la corrosion, du type revêtement applicable manuellement.

7. Composition durcissable d'uréthane selon la revendication 4, 5 ou 6, qui est un revêtement imperméable, un revêtement pour sol, ou un matériau destiné à inhiber la corrosion, de type revêtement applicable par pulvérisation et à durcissement ultra rapide.
